# EUROPEAN PATENT APPLICATION

(11) **EP 2 020 401 A1**
(43) Date of publication of application: **04.02.2009**
(21) Application number: 07712548.2
(22) Date of filing: 31.01.2007
(51) Int. Cl.: C02F 1/78, A23L 1/015

(54) **INSTALLATION FOR STERILIZING THE BRINE ORIGINATING FROM THE PRESERVATION OF AGRICULTURAL PRODUCTS, FISH PRESERVES AND LEATHER**

(30) Priority: 22.03.2006 ES 200600732
(71) Applicant: Taboada Presedo Jesús Manuel, 36800 Redondela (ES)
(72) Inventor: Taboada Presedo Jesús Manuel, 36800 Redondela (ES)
(74) Representative: Temino Ceniceros, Ignacio
(86) International application number: PCT/ES2007/000054
(87) International publication number: WO 2007/107610

(57) **Abstract**

Sterilization of the brine is based on the use of a triple reactor (7) subjected to pressure, where the brine is reacted with ozone from an ozonizer (13) into which compressed air is injected, which is incorporated into the reactor (7) by means of an ejector (19) and an electrical pump (20). In turn, the brine (1) injected into the reactor (7) makes use of the non-integrated ozone located in the top part of the reactor by means of another electrical pump (5), an ejector (6) and a UV sterilizer (2), which will destroy some of the bacteria. The third reaction is achieved by aspirating the non-integrated ozone in the top part of the reactor (7), using another electrical pump (22) and another ejector (23) continuously. For reuse and to lower the redox, a UV-ray system (34) at the outlet from the reactor, a filter (35) for separating out endotoxins and flow-and-pressure-regulating valves (32) and (33) will be installed for maintaining the redox measurement above 850 mV.

## Description

### OBJECT OF THE INVENTION

This invention is an installation that is given over to the sterilization of the brine in its different degrees of saturation or mixture with a view to reusing it.

Furthermore, the recovery and reuse of this brine amounts to a major ecological breakthrough, in view of the fact that it prevents the rivers or land where it is dumped from being polluted.

The invention places special emphasis on the recovery of the brine that originates from the preservation of olives, in view of the major bacteriological pollution that this substance causes in the countries that produce olive oil on the Mediterranean Coast.

Therefore, the installation that is advocated can be especially applied to the fish preservation industry (tuna, sardine, mackerel, cod, anchovy, etc.), in the olive, cucumber, onion, etc. industry and in the leather manufacturing industry.

### BACKGROUND TO THE INVENTION

It is a well-known fact that the greatest production of olives in the world is concentrated on the Mediterranean Coast: Spain, France, Italy, Greece, Turkey and the countries on the North African Coast. The direct consumption of olives that is not given over to manufacturing olive oil has increased in the world, leading to the pollution of the Mediterranean Sea.

Olives have to undergo several processes to make them fit for consumption; the final process involves preserving them in large quantities of brine until they are packaged. Olives are harvested in only three months of the year, so if they are to be supplied all the year round, they have to be kept in brine.

At the present time there are processes for removing the organic matter, olive oil related elements and other components that remain in the brine. Filtration, separation, centrifuging, decantation and flocculation are all used to overcome the problem of the organic matter, so the brine that is left is of good physical quality, but the degree of bacteriological pollution is very high, so it has to be rejected and disposed of.

The regulations that are currently in force prohibit the direct dumping of this brine, primarily because of its high salt content, making the effluent and land salty, and secondly because of its high bacteria content.

### DESCRIPTION OF THE INVENTION

The installation that is proposed by the invention aims to overcome the problems referred to above in a totally satisfactory way: sterilization with the complete removal of bacteria, the reuse of the brine and preventing pollution.

With a view to this, and to be more specific, this installation process begins by injecting or pumping the brine originating from the physical treatment at the installation that is advocated, which is composed of a reactor or cylindrical tank where the process is carried out. An electrical pump supplies the reactor by injecting the brine into the latter after it has been filtered at 5µ and sterilized by means of a UV sterilizer. An ozone generator or ozonizer that is pre-supplied with compressed air via a water separator and a total dryer, will produce ozone under pressure and a discharge that can be controlled, which flow to an ejector where another electrical pump will collect the brine from the reactor and will inject it once again through the bottom, drawing out the ozone that is produced and making it flow into the reactor. The aforementioned injection pump will pump the brine into the tank, collecting the ozone that has not been sent into the brine, doing so by means of another ejector and will send it into that brine. Another electrical pump with a lower flow rate and a higher pressure will continuously collect via another ejector, the ozone located at the top of the reactor that has not been incorporated into the brine. It is thus possible to ensure that 95% of the ozone that is produced will be incorporated into the brine, thereby obtaining a REDOX measurement that ranges from 850 to 1,200 mV.

The reactor will invariably be subjected to a pressure ranging from 3 to 5 bars, in order to obtain a diffusion column of between 30 and 50 metres.

At the outlet or the point where the brine is discharged from the reactor, depending on the subsequent use of the brine, a UV-ray system is installed together with a filter for separating out endotoxins to remove the toxines and the ozone from the brine. A series of retainer valves and flow-and pressure-regulating valves will regulate the production of the sterile brine.

The performance level of the equipment will depend on the relationship between the production of ozone and the cubic metres of sterile brine that are produced. This ratio is 1gr/hour = 700 to 800 litres of sterile brine.

### DESCRIPTION OF THE DRAWINGS

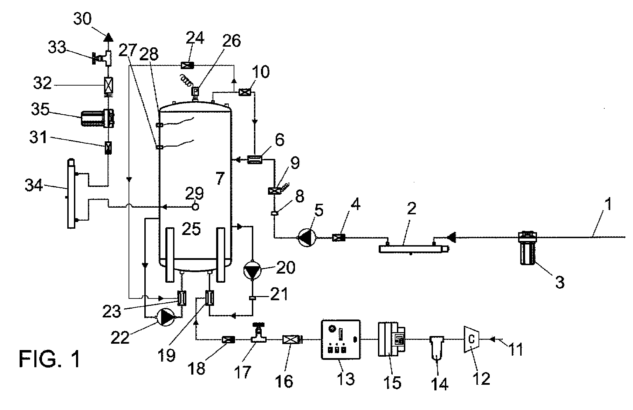

One single page of plans is used to make it easier to understand what has been described above, in which a practical embodiment is represented, this being shown merely by way of an example, and is in no way limiting. The single figure shows an elevation view of an installation for obtaining sterile brine coming from the filtering process to which the brine is subjected that is produced from the preservation of agricultural products, fish preserves and leather carried out in accordance with the object of the invention.

### PREFERRED EMBODIMENT OF THE INVENTION

It can be seen from the figure how the installation that is advocated runs from an intake (1) of brine coming from the physical treatment and a UV sterilizer (2); it passes through a 5µ filter (3), a retainer valve (4) to the electrical pump (5) whose discharge rate and pressure have been calculated to work through the ejector (6) and this makes the brine flow into the reactor (7). As it passes through, the brine will be measured by a conductivimeter (8) in mS and a solenoid (9) that comes into operation as soon as the electrical pump (5) is started up. As the brine flows through the ejector (6) it will aspirate by vacuum and entrain through the retainer valve (10) the non-integrated ozone that is located at the top of the reactor.

Furthermore, on the air / ozone line (11), an air compressor (12) will inject air into the ozonizer (13) at 7 pressure bars, through a water particle trap (14) and through a total air-dryer (15). The ozonizer (13) will be regulated by means of a pressure-regulating valve (16), a flow-regulating valve (17) and a retainer valve (18). The ozone that is produced will flow into the ejector (19) and will be aspirated and will be pumped into the reactor (7) by an electrical recirculation pump (20) which aspirates brine from the reactor (7) and inserts it into the latter through the bottom. The oxidation-reduction will be measured in mV along the route with a REDOX measurement device (21), which will also regulate the ozone production, not letting it fall below 850 mV.

A third reaction line that will be connected on standby will aspirate the brine from the reactor (7) by means of an electrical pump (22) with a low flow rate and high pressure and will make it flow on as far as the reactor (7) via the ejector (23), aspirating the non-integrated ozone at the top of the reactor (7) through the retainer valve (24).

This triple reaction will ensure that no ozone is wasted, all of it being incorporated into the brine, with maximum performance.

The inside of the reactor (7) is equipped with diffusion cones (25) that together with the pressure from the reactor (7), regulated by the pressure gauge (26) between 3 and 5 bars, will act in a column of ozone diffusion between 30 and 50 m of water column.

A minimum level (27) and a maximum level (28) will regulate the height of the brine and together with the pressure gauge (26), will also regulate the pressure inside the reactor (7).

The discharge point (29) for the sterile brine is located half way up the minimum level of the reactor (7) and located in the centre of its interior.

The sterile brine (30) will be discharged through a retainer valve (31), a pressure-regulating valve (32) and a flow-regulating valve (33), with a view to optimising the flow of the sterile brine produced at the desired REDOX.

With a view to preventing the sterile brine produced with high REDOX being used in products that may interfere because of their high ozone content, it is planned to install a UV-ray system (34) to remove the ozone and its resulting REDOX, as well as a filter for separating out endotoxins (35).

## Claims

1. Installation for sterilizing the brine originating from the preservation of agricultural products, fish preserves and leather, which is based on the application of ozone to destroy the bacteria contained in the brine, **characterised by** the fact that it is equipped with a reactor (7) in which three reaction lines converge, one line (1) giving access to the brine, a second line (11) as an intake for the ozonized air, and a third line that aspirates the brine from the reactor (7) and returns it to the reactor by aspirating the ozone that is at the top of the reactor, this reactor (7) also being provided with an outlet (29) for the sterile brine.

2. Installation for sterilizing the brine originating from the preservation of agricultural products, fish preserves and leather, as in Claim 1, **characterised by** the fact that the brine intake reaction line is equipped with a filter (3), a UV sterilizer (2), a retainer valve (4), an electrical pump (5), a conductivimeter (8), a solenoid (9) and an ejector (6) for supplying the reactor (7) with the brine.

3. Installation for sterilizing the brine originating from the preservation of agricultural products, fish preserves and leather, as in the previous claims, **characterised by** the fact that the air intake line (11) is equipped with an air compressor (12), a trap (14) for water particles, an air dryer (15), an ozonizer (13), a pressure-regulating valve (16), a flow-regulating valve (17), a retainer valve (18) and a second ejector (19) that accesses the reactor (7) through the bottom.

4. Installation for sterilizing the brine originating from the preservation of agricultural products, fish preserves and leather, as in Claim 3, **characterised by** the fact that the ozone that reaches the reactor (7) is aspirated and pumped back into the aforementioned reactor by means of an electrical recirculation pump (20) and a REDOX measurement device (21), through the ejector itself (19).

5. Installation for sterilizing the brine originating from the preservation of agricultural products, fish preserves and leather, as in the previous claims, **characterised by** the fact that the brine that reaches the reactor (7) is recycled by means of an electrical pump (22) that sends it back into the reactor (7) via an ejector (23), ejector (23) through which the ozone that is not integrated into the top of the reactor (7) is also recycled, by means of a retainer valve (24).

6. Installation for sterilizing the brine originating from the preservation of agricultural products, fish preserves and leather, as in the previous claims, **characterised by** the fact that the sterile brine outlet line (30) is provided with a retainer valve (31), a pressure-regulating valve (32), a flow-regulating valve (33), a UV-ray system (34) and a filter for separating out endotoxins (35).

7. Installation for sterilizing the brine originating from the preservation of agricultural products, fish preserves and leather, as in the previous claims, **characterised by** the fact that the inside of the reactor (7) is equipped with diffusion cones (25), a regulating pressure gauge (26) and maximum and minimum levels (27) and (28) that regulate the height of the brine inside the reactor (7).
